# EUROPEAN PATENT APPLICATION

(11) **EP 3 499 798 A1**
(43) Date of publication of application: **19.06.2019**
(21) Application number: 17207686.1
(22) Date of filing: 15.12.2017
(51) Int. Cl.: H04L 12/24, H04L 12/26

(54) **METHOD FOR TRANSMITTING DATA WITHIN AN INDUSTRIAL COMMUNICATION NETWORK AND NETWORK CONTROLLER**

(71) Applicant: Siemens Aktiengesellschaft, 80333 München (DE)
(72) Inventor: Riedl, Johannes, 84030 Ergolding (DE); Sakic, Ermin, 81379 München (DE); Zafirovic-Vukotic, Mirjana, Maple, L6A0X9 (CA); Zirkler, Andreas, 81735 München (DE)

(57) **Abstract**

The present invention relates to a method for transmitting data within an industrial communication network in which functions of a plurality of first network devices (200) are controlled by means of at least one network controller (101, 102). At least one group of second network devices (301-303) mutually monitoring each other is defined. Within said group of second network devices, a respective path tree (401, 402) from each second network device to all other second network devices is determined. By means of the network controller (101, 102), routing, forwarding, traffic shaping and/or scheduling functions of the first network devices are configured in accordance with said path trees (401, 402). Datagrams comprising monitoring and/or control data (300) are transmitted from each second network device (301-303) to all other second network devices within said group along said path trees (401, 402).

## Description

Industrial automation systems are designed to monitor and control technical processes, particularly for factory, process or building automation, and provide for operating control devices, sensors, machines and industrial plants autonomously and substantially independent from human intervention. Usually, industrial automation systems comprise a plurality of automation devices interconnected with each other via an industrial communication network. Due to a continuously growing impact of information technology on industrial automation systems, approaches for reliably providing monitoring and control functions within industrial automation systems gain increasing importance. Particular challenges experienced in industrial automation systems frequently result from message traffic with a large number of messages which are relatively short.

Generally, interruptions of communication connections might cause an unfavourable repetition of transmission of messages. Again, this usually results in additional loads on communication connections, which may further lead to malfunctions or system faults. If messages are not transmitted at all or not transmitted completely, an industrial automation system may be prevented from changing into a safe operating state or from remaining in such a safe operating state. Finally, this may lead to a costly outage of an entire production system.

Software-defined networking (SDN) aims at virtualizing functions of network devices by means of a functional decomposition of network devices, such as routers, switches or access points into components which can be assigned either to a control plane or to a data plane of a software-defined network. The data plane comprises functions or components, respectively for forwarding data packets or frames to selected destinations, whereas the control plane comprises management functions for controlling the functions and components assigned to the data plane. OpenFlow is an example of a standard for software-implemented control planes. By an abstraction of hardware functions as virtual services, manual configuration of these hardware functions is no longer necessary especially due to programmable and centralized control of network traffic. OpenFlow supports partitioning system resources into network slices, which permit providing pre-defined shares of system resources independently from other existing network slices.

DE 10 138 363 A1 discloses a method for guaranteeing the quality of service of internet applications. Depending on the usage of resources of an IP access network and of a given end system when internet applications start, the internet applications are automatically optimized. Accordingly, communication requirements originating from the internet applications and relating to the IP access network are collected and stored as user profiles. When an internet application is activated, available network resources are compared with the stored user profiles and control data is determined. By means of the determined control data, network resources are provided in an optimized way for the respective internet application.

EP 2 795 842 B1 relates to a controller for controlling communication services for a plurality of applications on a physical network having a plurality of network nodes providing certain network resources. Each of the applications is described by a set of requirements and is adapted to run on at least two of the network nodes. The controller comprises a generator and a calculator. The generator is adapted to generate a network model of the physical network including a topology of the physical network and a node model for each of the network nodes, wherein the node model describes node capabilities and node resources of the network node. The calculator is adapted to calculate virtual networks for the applications by mapping each of the set of requirements of the applications to the provided network model, wherein each of the calculated virtual networks includes at least two network nodes and a slice of the certain network resources. By calculating the virtual networks based on the provided network model, the planning of the physical network and its configuration are separated advantageously. Further, a method and a computer program product are provided.

In WO 2007/144364 A1, a method for connecting an automated plant to a network is described which comprises at least one cell with a subnetwork. The subnetwork is connected via a router to a further subnetwork of the automated plant. To connect the automated plant, a multicast group is provided which extends over both subnetworks. By means of the multicast group, a communication network address of a communication network interface of an assembly is detected. In this context, the assembly has joined the multicast group previously via the communication network address and the communication network interface has been connected previously to the subnetwork. Via the communication network address, a name is assigned to the communication network interface of the assembly. In a further step, a further communication network address of the communication network interface of the assembly is determined which exhibits at least a part of a numeric representation of the name.

WO 2016/206741 A1 relates to a forwarding device for use in a software-defined network, wherein the forwarding device is arranged to exchange control data with a controller which assigns an identification address to the forwarding device. The forwarding device broadcasts a request to receive an identification address of at least one controller. After receiving the identification address of the controller, the identification address of the controller is configured as destination address in the forwarding device to forward control data.

Distributed industrial applications, e.g. supervision and control applications within and between substations in energy management systems, require a real-time sensitive transmission of status and control information, especially datagrams comprising monitoring data, measured values and commands, between all involved devices belonging to a group of devices. Thus, every device of a group informs all other devices of the group about its status and control requirements. In case the status and control information includes commands, shows any abnormal behaviour or does not occur in time, specific measures are taken to avoid any system damage.

The present invention is based on the problem of realizing a method for transmitting especially monitoring data, measured values and commands within an industrial communication network which allows an efficient and reliable multipoint-to-multipoint distribution of such data within a group of network devices and providing appropriate means for implementing the method.

This problem is solved according to the present invention by means of a method having the features specified in claim 1 and by means of a controller having the features specified in claim 11. Advantageous embodiments of the present invention are specified in the dependent patent claims.

According to the present invention, a method for transmitting data within an industrial communication network is provided, wherein the method comprises controlling, by means of at least one network controller, functions of a plurality of first network devices or non-end devices, respectively. Each first network device is designed to forward datagrams within the industrial communication network and is assigned to at least one network controller controlling forwarding functions of assigned first network devices. The method further comprises defining at least one group of second network devices or end devices, respectively, wherein the second network devices mutually monitor each other by means of monitoring and/or control data received from other second network devices within the group of second network devices. Moreover, the method comprises determining a respective path tree from each second network device to all other second network devices within said group of second network devices and configuring, by means of the network controller, routing, forwarding, traffic shaping and/or scheduling functions of the first network devices in accordance with said path trees. Path trees, particularly shortest path trees, can be determined based on e.g. Dijkstra's algorithm, the Bellman-Ford algorithm or the Floyd-Warshall algorithm. Finally, the method according to the present invention comprises transmitting datagrams comprising monitoring and/or control data from each second network device to all other second network devices within said group along said path trees.

Preferably, quality of service parameters are specified for the monitoring and/or control data, and the routing, forwarding, traffic shaping and/or scheduling functions of the first network devices are configured in accordance with said quality of service parameters. Moreover, according to a particularly preferred embodiment of the present invention, said path trees are combined into a meshed network topology, wherein existing loops in said meshed network topology are determined and network links causing determined loops are removed from said network topology.

In yet another advantageous embodiment of the present invention, the forwarding functions of the first network devices are configured by means of routing and/or forwarding rules. Besides, the routing and/or forwarding rules for transmitting the datagrams comprising monitoring and/or control data within said meshed network topology are independent from sender addresses. Above routing and/or forwarding rules ensure that each such datagram that is originating from any second network device reaches all other second network devices. According to a further variant of the present invention, a multicast group address is reserved for each group of second network devices mutually monitoring each other and the datagrams comprising monitoring and/or control data are directed to said multicast group address.

Preferably, the first network devices are assigned to a software-defined network, comprising a control plane and a data plane. The network controller is assigned to the control plane, whereas the first network devices are assigned to the data plane. In a further advantageous embodiment, the first network devices comprise routers and/or switches, and the network controller is designed to provide its assigned first network devices with flow tables. Moreover, routing and/or forwarding tables for said first network devices are derived from the flow tables.

According to a further variant of the present invention, the industrial communication network comprises a plurality of partitions. The partitions each comprise pre-defined or configurable shares of system resources assigned to the respective partition, and the network controller determines network paths satisfying communication service requests within the respective partition in response to communication service requests.

In yet another advantageous variant of the present invention, the network controller determines a respective network path from a start network node to a destination network node via intermediate network nodes in response to communication service request from a user or from a second network device, respectively. Further, the network controller determines whether sufficient system resources are available during a planned usage period, especially during a cycle time, specified in the communication service request. Upon availability of sufficient system resources, the network controller reserves system resources satisfying the communication service request and controls routing, switching, traffic shaping and/or scheduling functions of the first network devices in accordance with the determined network path. According to yet another embodiment of the present invention, the communication service request comprises quality of service requirements, and the network controller verifies whether sufficient system resources satisfying the quality of service requirements are available. Upon a negative verification result, the network controller rejects the communication service request.

According to another aspect of the present invention, a network controller for executing a method described above is provided, wherein the network controller is configured for controlling functions of a plurality of first network devices, wherein each first network device is designed to forward datagrams within an industrial communication network and is assigned to the network controller. Besides, the network controller is configured for defining at least one group of second network devices, wherein the second network devices mutually monitor each other by means of monitoring and/or control data received from other second network devices within the group of second network devices. Moreover, the network controller is configured for determining a respective path tree from each second network device to all other second network devices within said group of second network devices. Additionally, the network controller is configured for configuring routing, forwarding, traffic shaping and/or scheduling functions of the first network devices in accordance with said path trees.

The present invention will be explained in more detail with reference to exemplary embodiments illustrated in the attached drawing, in which
- Figure 1: shows an industrial automation network comprising a plurality of network devices, each assigned to at least one network controller;
- Figure 2: shows a group of network devices from Figure 1 mutually monitoring each other;
- Figure 3: illustrates shortest path trees between the network devices shown in Figure 2;
- Figure 4: depicts a loop-free network topology resulting from the shortest path trees shown in Figure 3.

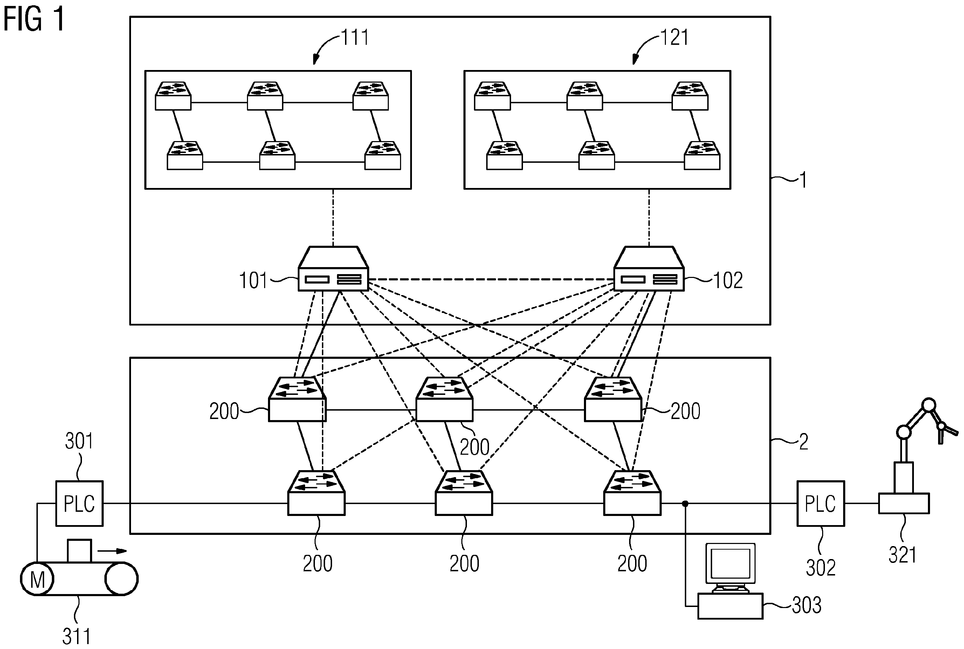

The industrial automation network shown in Figure 1 comprises a plurality of intermediate network devices 200, such as switches, routers or firewalls, and automation devices, such as a first programmable logic controller 301, a second programmable logic controller 302 or a monitoring and control station 303. Each of the intermediate network devices 200 is designed to forward datagrams within the industrial automation network, especially between programmable logic controls, IO modules (input/output) or monitoring and control stations, and is assigned to at least one network controller 101, 102 controlling forwarding functions of assigned network devices.

Typically, the programmable logic controllers 301, 302 each comprise a communication module, a central processing unit and at least one internal or peripheral IO module. By means of a communication module, a programmable logic controller can be connected to a switch, to a router or to a fieldbus system. Thus, the programmable logic controllers 301, 302 constitute network devices, particularly end devices, as well. The programmable logic controllers 301, 302 can also be referred to by names such as Intelligent Electronic Device or Merging Unit.

IO modules are used for exchanging control quantities and measured values between the programmable logic controllers 301, 302 and machines or devices 311, 321 controlled by means of a programmable logic controller. Interfaces between the programmable logic controllers 301, 302 and the machines or devices 311, 321 can be analogue or digital. The central processing units of the programmable logic controllers 301, 302 are designed and configured in particular for determining control quantities from measured values and for issuing control commands. Preferably, above components of a programmable logic control are connected to each another via a backplane bus system. In industrial automation systems and electric power systems, automation or field devices may also be implemented by sensors or sampling units, e.g. attached to high voltage lines, with reduced complexity or simple electronic circuitry. Such devices typically exchange information via their assigned controllers.

The communication modules each comprise a transmitting and receiving unit implemented by means of a PHY circuit and a functional unit which is implemented by means of a MAC circuit and is intended to control access to a communication medium. The communication modules access their communication network adapters via interface drivers as hardware abstraction elements.

The monitoring and control station 303 is used for visualizing process control data, control quantities and measured values which are processed or collected, respectively by programmable logic controls, IO modules and sensors. Particularly, in the present embodiment the monitoring and control station 303 comprises at least a graphical user interface, an input device, a processor and a communication module. Accordingly, also the monitoring and control station 303 constitutes a network device.

Preferably, the network devices 200 are assigned to a software-defined network comprising a control plane 1 and a data plane 2. In this scenario, the network controllers 101, 102 are assigned to the control plane 1, whereas especially routing or switching functions of the network devices 200 are assigned to the data plane 2. Moreover, the network controllers 101, 102 are designed to provide their assigned network devices 200 with flow tables from which routing and forwarding tables, respectively for said network devices 200 are derived. Thus, the network controllers 101, 102 each control functions of a plurality of assigned network devices 200.

Generally, the network controllers 101, 102 are enabled to each determine a respective network path from a start network node, e.g. represented by the first 301 or the second programmable logic control 302, to a destination network node, e.g. represented by the monitoring and control station 303, via intermediate network nodes, e.g. represented by the network devices 200, in response to communication service request from a user or from an end device. The network controllers 101, 102 determine whether sufficient system resources are available during a planned usage period or during a cycle time specified in the communication service request. If sufficient system resources are available, the network controllers 101, 102 reserve system resources satisfying the communication service request and control routing, switching, traffic shaping and/or scheduling functions of the network devices 200 in accordance with the determined network path. Moreover, the communication service request may comprise quality of service requirements. In this case, the network controllers 101, 102 verify whether sufficient system resources satisfying the quality of service requirements are available. Upon a negative verification result, the network controllers 101, 102 reject the respective communication service request.

According to a preferred embodiment, the industrial automation network comprises a plurality of partitions. The partitions each comprise pre-defined shares of system resources assigned to the respective partition. Besides, the network controllers 101, 102 determine network paths satisfying communication service requests within the respective partition in response to communication service requests. The partitions may be defined manually by a system administrator or automatically by means of an engineering system. In the present embodiment, each network controller 101, 102 is provided with a consistent resource view 111, 112 comprising the respective shares of system resources.

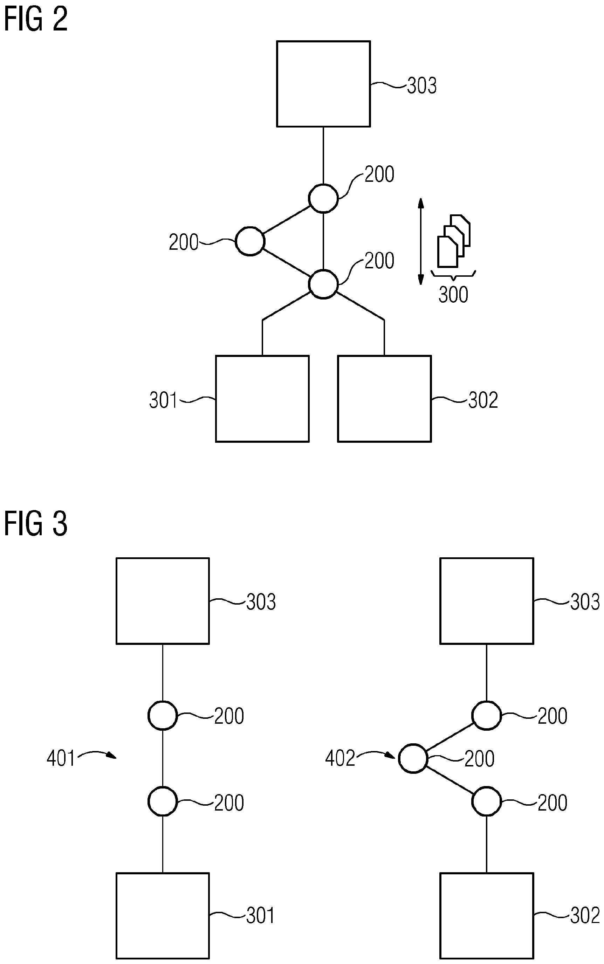

For transmitting monitoring and control data within the industrial automation network or within an industrial communication network, respectively, at least one group of end devices 301-303 is defined as shown in Figure 2. In such a group of end devices, the end devices 301-303 mutually monitor each other by means of monitoring and control data 300 received from other end devices within the group of end devices. Favourably, a multicast group address is reserved for each group of end devices mutually monitoring each other, such that datagrams comprising monitoring and control 300 data are directed to the respective multicast group address.

According to Figure 3, a respective shortest path tree is determined from each end device to all other end devices within the group of end devices; e.g. a first shortest path tree 401 between the first programmable logic controller 301 and the monitoring and control station 303 is determined based on defined criteria, and a second shortest path tree 402 between the second programmable logic controller 302 and the monitoring and control station 303 is determined analogously. Criteria for determining shortest path trees may be based on a path length leading to a shortest path or may be based on other criteria, such as a common base cycle time, especially if time aware shaping mechanisms are used. Particularly, the shortest path trees 401, 402 are calculated to distribute all data occurring at a given member of the group of end devices towards all other members, such that on each and every branch of the respective shortest path tree requested service parameters can be fulfilled. Preferably, for every member of the group of end devices a shortest path tree is calculated based on defined criteria to distribute all data occurring at a given member of the group of end devices towards all other members, such that on each and every branch of the shortest path tree all requested service parameters can be fulfilled in all forwarding directions.

In accordance with said shortest path trees 401, 402 determined above, routing, forwarding, traffic shaping and scheduling functions, respectively of the network devices 200 are configured by means of the assigned network controller 101, 102. Consequently, datagrams comprising monitoring and control data 300 from each end device 301-303 to all other end devices 301-303 within the group are transmitted along above shortest path trees 401, 402. In a preferred embodiment, quality of service parameters are specified for the monitoring and control data 300. In this case, the routing, forwarding, traffic shaping and scheduling functions of the network devices 200 are configured in accordance with said quality of service parameters.

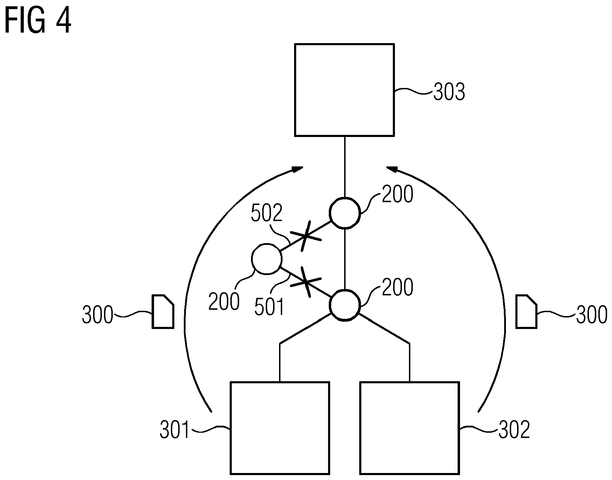

According to Figure 4, the shortest path trees 401, 402 determined above are combined into a meshed network topology. In doing so, existing loops in the meshed network topology are determined and network links 501, 502 causing loops are removed from the network topology as depicted in Figure 4. After removing the loops from the meshed network topology, the forwarding functions of the network devices 200 can be configured by means of routing and forwarding rules, respectively. Particularly, removing the loops allows for routing and forwarding rules which are independent from sender addresses leading to much less complicated rule complexity and a smaller amount of rules.

## Claims

1. A method for transmitting data within an industrial communication network, wherein the method comprises
- controlling, by means of at least one network controller (101, 102), functions of a plurality of first network devices (200), wherein each first network device is designed to forward datagrams within the industrial communication network and is assigned to at least one network controller controlling forwarding functions of assigned first network devices;
- defining at least one group of second network devices (301-303), wherein the second network devices mutually monitor each other by means of monitoring and/or control data (300) received from other second network devices within the group of second network devices;
- determining a respective path tree (401, 402) from each second network device to all other second network devices within said group of second network devices;
- configuring, by means of the network controller (101, 102), routing, forwarding, traffic shaping and/or scheduling functions of the first network devices in accordance with said path trees (401, 402);
- transmitting datagrams comprising monitoring and/or control data (300) from each second network device (301-303) to all other second network devices within said group along said path trees (401, 402).

2. The method according to claim 1,
wherein quality of service parameters are specified for the monitoring and/or control data (300), and wherein the routing, forwarding, traffic shaping and/or scheduling functions of the first network devices (200) are configured in accordance with said quality of service parameters.

3. The method according to claim 1 or 2,
wherein said path trees (401, 402) are combined into a meshed network topology, and wherein existing loops in said meshed network topology are determined, and wherein network links (501, 502) causing determined loops are removed from said network topology.

4. The method according to claim 3,
wherein the forwarding functions of the first network devices (200, 301-303) are configured by means of routing and/or forwarding rules, and wherein the routing and/or forwarding rules for transmitting the datagrams comprising monitoring and/or control data (300) within said meshed network topology are independent from sender addresses.

5. The method according to one of the claims 1 to 4,
wherein a multicast group address is reserved for each group of second network devices (301-303) mutually monitoring each other, and wherein the datagrams comprising monitoring and/or control data (300) are directed to said multicast group address.

6. The method according to one of the claims 1 to 5,
wherein the first network devices (200) are assigned to a software-defined network, comprising a control plane (1) and a data plane (2), and wherein the network controller (101, 102) is assigned to the control plane, and wherein the first network devices (200) are assigned to the data plane.

7. The method according to claim 6,
wherein the first network devices (200) comprise routers and/or switches, and wherein the network controller (101, 102) is designed to provide its assigned first network devices with flow tables, and wherein routing and/or forwarding tables for said first network devices are derived from the flow tables.

8. The method according to one of the claims 1 to 7,
wherein the industrial communication network comprises a plurality of partitions, and wherein the partitions each comprise pre-defined or configurable shares of system resources assigned to the respective partition, and wherein the network controller determines network paths satisfying communication service requests within the respective partition in response to communication service requests.

9. The method according to one of the claims 1 to 8,
wherein the network controller (101, 102) determines a respective network path from a start network node to a destination network node via intermediate network nodes in response to communication service request from a user and/or a second network device (301, 302), and wherein the network controller determines whether sufficient system resources are available during a planned usage period specified in the communication service request, and wherein the network controller reserves system resources satisfying the communication service request and controls routing, switching, traffic shaping and/or scheduling functions of the first network devices in accordance with the determined network path upon availability of sufficient system resources.

10. The method according to claim 9,
wherein the communication service request comprises quality of service requirements, and wherein the network controller verifies whether sufficient system resources satisfying the quality of service requirements are available, and wherein the network controller rejects the communication service request upon a negative verification result.

11. A network controller for executing a method according to one of the claims 1 to 10, wherein the network controller is configured for
- controlling functions of a plurality of first network devices (200), wherein each first network device is designed to forward datagrams within an industrial communication network and is assigned to the network controller;
- defining at least one group of second network devices (301-303), wherein the second network devices mutually monitor each other by means of monitoring and/or control data (300) received from other second network devices within the group of second network devices;
- determining a respective path tree (401, 402) from each second network device (301-303) to all other second network devices within said group of second network devices;
- configuring routing, forwarding, traffic shaping and/or scheduling functions of the first network devices (200) in accordance with said path trees (401, 402).

12. The network controller according to claim 11,
wherein the network controller (101, 102) is configured for combining said path trees (401, 402) into a meshed network topology, and wherein the network controller is further configured for determining existing loops in said meshed network topology, and wherein the network controller is further configured for removing network links (501, 502) causing determined loops from said network topology.

13. The network controller according to claim 12,
wherein the network controller (101, 102) comprises means for configuring the forwarding functions of the first network devices (200, 301-303) by means of routing and/or forwarding rules, and wherein the routing and/or forwarding rules for transmitting the datagrams comprising monitoring and/or control data (300) within said meshed network topology are independent from sender addresses.
